# EUROPEAN PATENT APPLICATION

(11) **EP 4 093 155 A1**
(43) Date of publication of application: **23.11.2022**
(21) Application number: 20914603.4
(22) Date of filing: 06.04.2020
(51) Int. Cl.: H05B 6/64, G06N 20/00, G06N 3/08, G06K 9/20, G06K 9/62, H05B 6/66

(54) **COOKING APPARATUS USING ARTIFICIAL INTELLIGENCE AND METHOD FOR OPERATING SAME**

(30) Priority: 13.01.2020 KR 20200004248
(71) Applicant: LG Electronics Inc., Seoul 07336 (KR)
(72) Inventor: KIM, Boeun, Seoul 08715 (KR)
(74) Representative: Vossius & Partner Patentanwälte Rechtsanwälte mbB
(86) International application number: PCT/KR2020/004603
(87) International publication number: WO 2021/145511

(57) **Abstract**

Embodiments of the present disclosure relate to a cooking appliance using artificial intelligence and an operation method thereof. The artificial intelligence cooking appliance may include: a driving device for cooking a product to be cooked; an image sensor configured to obtain an image related to the product to be cooked; and at least one processor connected operatively to the driving device and the image sensor. The at least one processor may control the cooking appliance to obtain the image related to the product to be cooked, to obtain cooking information of the product to be cooked, on the basis of the image, and to cook the product to be cooked, on the basis of the cooking information.

## Description

### BACKGROUND OF THE INVENTION

### Field of the Invention

The present disclosure relates to a cooking appliance using artificial intelligence and an operation method thereof.

### Description of the Related Art

With the development of technology, devices equipped with artificial intelligence (AI) have been widely introduced. In particular, a technology capable of retrieving information by recognizing characters or images by using artificial intelligence is widely used, and a service using such artificial intelligence is also being applied to home appliances including cooking appliances.

In general, a cooking appliance is used to cook food by using various heat sources. Various types of cooking appliance products are being released according to the heat source. Among them, a microwave oven is a cooking appliance that uses microwaves. The microwave oven can heat food in accordance with a cooking time, a cooking method, and a product to be cooked which are input through an input unit formed on a front panel unit of the microwave oven.

Recently, the number of home meal replacements (HMR) that can be easily cooked by using a microwave oven is increasing. However, there is a disadvantage that a cooking method recommended in accordance with a product to be cooked cannot be applied to a cooking process using cooking appliances when a user is not fully aware of a cooking method for the product.

### SUMMARY OF THE INVENTION

### Technical Problem

The purpose of the present invention is to provide an artificial intelligence cooking appliance that recognizes, by using artificial intelligence, a cooking method from an image of a product to be cooked and applies the cooking method to cooking operations, and an operation method of the artificial intelligence cooking appliance.

The technical problem to be overcome by the present invention is not limited to the above-mentioned technical problems. Other technical problems not mentioned can be clearly understood from the embodiments of the present invention by a person having ordinary skill in the art.

### Technical Solution

One embodiment is an artificial intelligence cooking appliance including: a driving device for cooking a product to be cooked; an image sensor configured to obtain an image related to the product to be cooked; and at least one processor connected operatively to the driving device and the image sensor. The at least one processor may control the cooking appliance to obtain the image related to the product to be cooked, to obtain cooking information of the product to be cooked, on the basis of the image, and to cook the product to be cooked, on the basis of the cooking information.

Another embodiment is an electronic device including a communication circuit configured to perform data communication with at least one cooking appliance; and at least one processor connected operatively to the communication circuit. The at least one processor may control the electronic device to obtain an image related to a product to be cooked, to obtain, from the image, cooking information of the product to be cooked, and to transmit the cooking information to the at least one cooking appliance.

Further another embodiment is operation method of an artificial intelligence cooking appliance. The operation method may include: obtaining an image related to a product to be cooked; obtaining cooking information of the product to be cooked, on the basis of the image; and cooking the product to be cooked, on the basis of the cooking information.

Yet another embodiment is an operation method of an electronic device. The operation method may include: obtaining an image related to a product to be cooked; obtaining cooking information of the product to be cooked, on the basis of the image; and transmitting the cooking information to at least one cooking appliance.

### Advantageous Effects

An artificial intelligence cooking appliance according to embodiments of the present disclosure obtains, through optical character recognition, cooking information from an image of a product to be cooked, and is automatically controlled according to the obtained cooking information, so that user experience with the cooking appliance can be improved.

Advantageous effects that can be obtained from the present disclosure are not limited to the above-mentioned effects. Further, other unmentioned effects can be clearly understood from the following descriptions by those skilled in the art to which the present disclosure belongs.

### BRIEF DESCRIPTION OF THE DRAWINGS

FIG. 1 shows an artificial intelligence (AI) system according to various embodiments of the present disclosure;
FIG. 2 shows an AI server including artificial intelligence technology according to various embodiments of the present disclosure;
FIG. 3 shows conceptually a cooking appliance according to various embodiments of the present disclosure;
FIG. 4 shows an example of a fully connected artificial neural network structure;
FIG. 5 shows an example of a convolutional neural network (CNN) structure that is a type of a deep neural network;
FIG. 6A is a view for describing the cooking appliance according to various embodiments of the present disclosure;
FIG. 6B is a view for describing an operation in which the cooking appliance according to various embodiments of the present disclosure recognizes a cooking method from an image of a product to be cooked;
FIG. 7 is a flowchart showing an operation method of the cooking appliance according to the embodiments of the present disclosure;
FIG. 8 is a flowchart showing an operation method of at least one external device according to the embodiments of the present disclosure;
FIG. 9 is a flowchart showing an operation in which the at least one external device according to the embodiments of the present disclosure transmits cooking information;
FIG. 10 is a view for describing an operation in which the external device according to various embodiments of the present disclosure selects a target device;
FIG. 11 shows an operation in which a cooking system according to the embodiments of the present disclosure performing a cooking operation;
FIG. 12 shows another operation in which the cooking system according to the embodiments of the present disclosure performing the cooking operation; and
FIG. 13 shows further another operation in which the cooking system according to the embodiments of the present disclosure performing the cooking operation.

### DETAILED DESCRIPTION OF THE INVENTION

Hereinafter, embodiments of the present disclosure will be described in detail with reference to the accompanying drawings, in which the same or similar components will be given the same reference numerals, and redundant description thereof will be omitted.

A suffix "module" or "part" for the component, which is used in the following description, is given or mixed in consideration of only convenience for ease of specification, and does not have any distinguishing meaning or function per se. Also, the "module" or "part" may mean software components or hardware components such as a field programmable gate array (FPGA), an application specific integrated circuit (ASIC). The "part" or "module" performs certain functions. However, the "part" or "module" is not meant to be limited to software or hardware. The "part" or "module" may be configured to be placed in an addressable storage medium or to restore one or more processors. Thus, for one example, the "part" or "module" may include components such as software components, object-oriented software components, class components, and task components, and may include processes, functions, attributes, procedures, subroutines, segments of a program code, drivers, firmware, microcode, circuits, data, databases, data structures, tables, arrays, and variables. Components and functions provided in the "part" or "module" may be combined with a smaller number of components and "parts" or "modules" or may be further divided into additional components and "parts" or "modules".

Methods or algorithm steps described relative to some embodiments of the present disclosure may be directly implemented by hardware and software modules that are executed by a processor or may be directly implemented by a combination thereof. The software module may be resident on a RAM, a flash memory, a ROM, an EPROM, an EEPROM, a resistor, a hard disk, a removable disk, a CD-ROM, or any other type of record medium known to those skilled in the art. An exemplary record medium is coupled to a processor and the processor can read information from the record medium and can record the information in a storage medium. In another way, the record medium may be integrally formed with the processor. The processor and the record medium may be resident within an application specific integrated circuit (ASIC). The ASIC may be resident within a user's terminal.

Also, in the following description of the embodiment disclosed in the present specification, the detailed description of known technologies incorporated herein is omitted to avoid making the subject matter of the embodiment disclosed in the present specification unclear. Also, the accompanied drawings are provided only for more easily describing the embodiment disclosed in the present specification. The technical spirit disclosed in the present specification is not limited by the accompanying drawings. All modification, equivalents and substitutes included in the spirit and scope of the present invention are understood to be included in the accompanying drawings.

While terms including ordinal numbers such as the first and the second, etc., can be used to describe various components, the components are not limited by the terms mentioned above. The terms are used only for distinguishing between one component and other components.

When it is said that a component is "connected" or "coupled" to another component, the component may be directly connected to or coupled to that other component, but it should be understood that another component may exist between them. On the other hand, when it is said that a component is "directly connected" or "directly coupled" to another component, it should be understood that no other component may exist between them.

In addition, artificial intelligence referred to in the following description refers to the field of studying artificial intelligence or methodology for making artificial intelligence, and the machine learning refers to the field of defining various issues dealt with in the field of artificial intelligence and studying methodology for solving the various issues. The machine learning is defined as an algorithm that enhances the performance of a certain task through steady experience with the certain task.

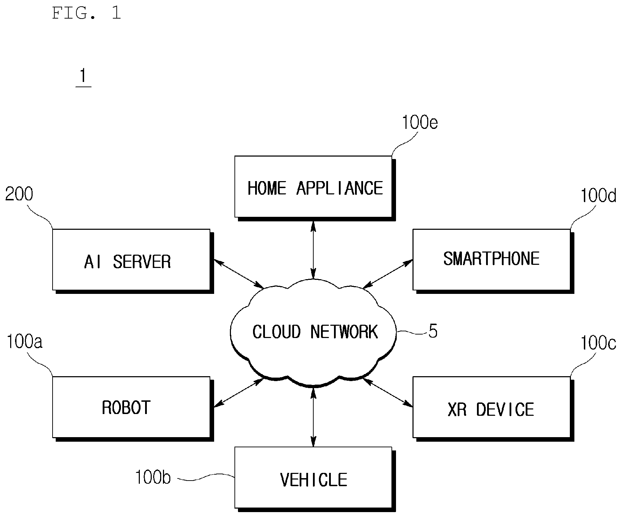

FIG. 1 shows an artificial intelligence (AI) system 1 according to various embodiments of the present disclosure.

Referring to FIG. 1, in the AI system 1, one or more of an AI server 200, a robot 100a, a vehicle 100b, an XR device 100c, a smartphone 100d, or a home appliance 100e may be connected through a cloud network 5.

The cloud network 5 may constitute a portion of a cloud computing infrastructure or may mean a network existing in the cloud computing infrastructure. Here, the cloud network 5 may be configured by using a 3G network, a 4G or Long-Term Evolution (LTE) network, or a 5G network, etc.

According to various embodiments, each of the electronic devices 100a to 100e and 200 constituting the AI system 1 may be connected to each other through the cloud network 5. According to the embodiment, the electronic devices 100a to 100e and 200 may communicate with each other through a base station or an access point (AP) or may also directly communicate with each other without using the base station or AP.

The AI server 200 may include a server that performs artificial intelligence processing and a server that performs an operation on big data.

The AI server 200 may be connected through the cloud network 5 to one or more of electronic devices including an artificial intelligence technology constituting the AI system 1, such as the robot 100a, the vehicle 100b, the XR device 100c, the smartphone 100d, or the home appliance 100e. The AI server 200 may assist at least a portion of artificial intelligence processing of the connected electronic devices 100a to 100e.

According to various embodiments, the AI server 200 may train an artificial neural network in accordance with a machine learning algorithm instead of the electronic devices 100a to 100e, and may directly store a learning model or transmit the learning model to the electronic devices 100a to 100e.

According to various embodiments, the AI server 200 may receive input data from the electronic devices 100a to 100e, may infer a result value with respect to the received input data by using the learning model, may generate a response or a control command based on the inferred result value, and may transmit the response or the control command to the electronic devices 100a to 100e.

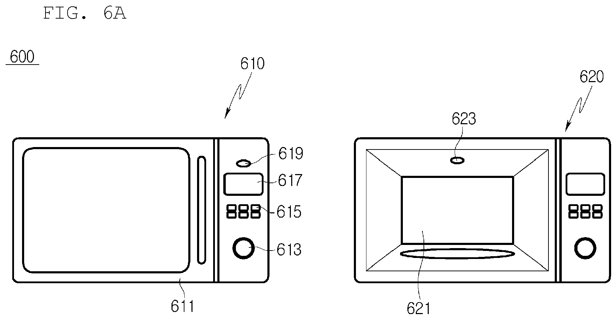

According to other various embodiments, the electronic devices 100a to 100e may infer a result value with respect to the input data by directly using the learning model and may generate a response or a control command based on the inferred result value. According to the embodiment, an AI technology may be applied to the home appliance 100e. As will be described later with reference to FIGS. 6A to 13, the home appliance 100e may include a cooking appliance that recognizes a cooking method from an image of a product to be cooked and applies the cooking method to a cooking operation. For example, the home appliance 100e may include a microwave oven that vibrates water molecules contained in food by using microwaves generated by a magnetron and rapidly heats the food by frictional heat generated by the vibration. However, this is only an example, and the embodiment of the present disclosure is not limited thereto. For example, the home appliance 100e may include various devices capable of cooking food, such as a microwave oven, a gas oven, and a gas stove.

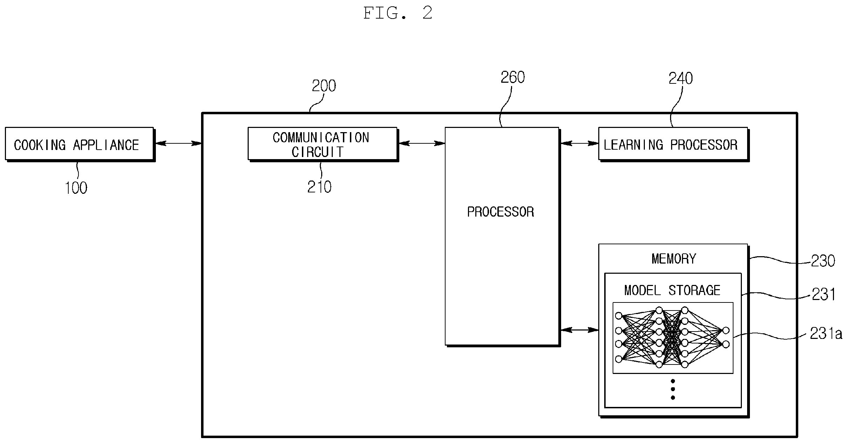

FIG. 2 shows AI server 200 including the artificial intelligence technology according to various embodiments of the present disclosure.

Referring to FIG. 2, the AI server 200 may mean a device that trains an artificial neural network by using a machine learning algorithm or uses a trained artificial neural network. Here, the AI server 200 may be composed of a plurality of servers to perform distributed processing, or may be defined as a 5G network. According to the embodiment, the AI server 200 may be included as a part of at least one electronic device (e.g., 100a to 100e of FIG. 1) constituting the AI system 1. In addition, the AI server 200 may perform at least a portion of artificial intelligence processing together with at least one of the electronic devices 100a to 100e constituting the AI system 1. In the embodiment, when a computing power of the at least one of the electronic devices 100a to 100e is insufficient, the at least one of the electronic devices 100a to 100e may request the AI server 200 to perform at least a portion or all of the artificial intelligence processing.

The AI server 200 may include a communication circuit 210, a memory 230, a learning processor 240, and a processor 260.

According to various embodiments, the communication circuit 210 may transmit and receive data to and from at least one external device (e.g., at least one of the electronic devices 100a to 100e). According to the embodiment, the communication circuit 210 may transmit and receive data to and from the external device through the cloud network 5, or according to another embodiment, the communication circuit 210 may directly transmit and receive data to and from the external device.

According to various embodiments, the memory 230 may include a model storage 231. The model storage 231 may store a model (or an artificial neural network 231a) which is being trained or has been trained through the learning processor 240.

According to various embodiments, the learning processor 240 may generate a learning model which has trained the artificial neural network 231a by using learning data. The learning model may be used while being mounted on the AI server 200 of the artificial neural network, or may be used while being mounted on an external device. According to the embodiment, the learning model may be implemented with hardware, software or a combination of hardware and software. When the learning model is partially or wholly implemented in software, one or more instructions constituting the learning model may be stored in the memory 230.

According to various embodiments, the processor 260 may infer a result value with respect to new input data by using the learning model, and may generate a response or a control command based on the inferred result value.

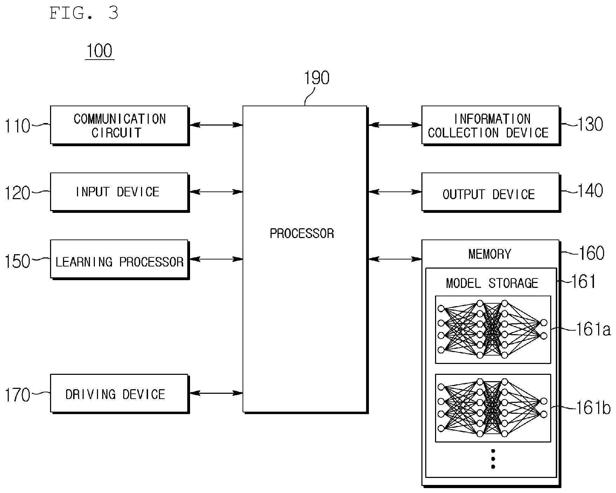

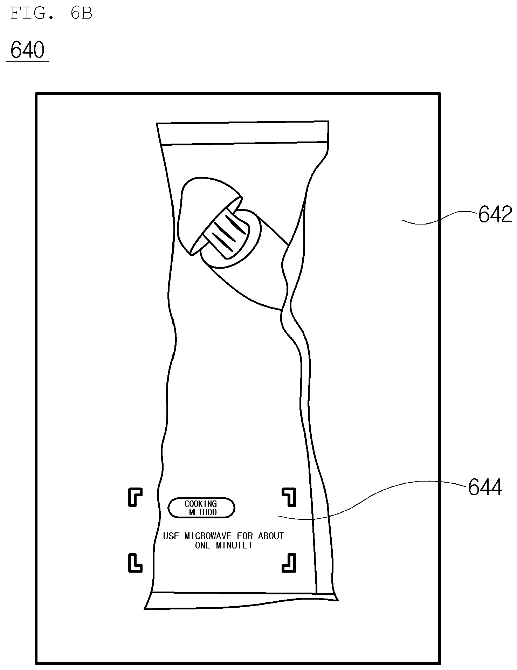

FIG. 3 shows conceptually a cooking appliance 100 (e.g., an artificial intelligence cooking appliance) according to various embodiments of the present disclosure. FIG. 6A is a view 600 for describing the cooking appliance 100 according to various embodiments of the present disclosure. FIG. 6B is a view 640 for describing an operation in which the cooking appliance 100 according to various embodiments of the present disclosure recognizes a cooking method from an image of a product to be cooked. The cooking appliance 100 shown in FIG. 3 may be the home appliance 100e described above with reference to FIG. 1.

Referring to FIG. 3, the cooking appliance 100 includes a communication circuit 110, an input device 120, an information collection device 130, an output device 140, a learning processor 150, a memory 160, and a driving device 170 and a processor 180.

According to various embodiments, the communication circuit 110 may be configured to transmit and receive data to and from other electronic devices or external devices such as the AI server 200 by using wired/wireless communication technologies. For example, the communication circuit 110 may transmit and receive sensor information, a user input, a learning model, a control signal, and the like to and from external devices. According to the embodiment, the communication circuit 110 may use a wireless communication technology such as Global System for Mobile communication (GSM), Code Division Multi Access (CDMA), Long Term Evolution (LTE), fifth generation communication (5G), Wireless LAN (WLAN), Wireless-Fidelity (Wi-Fi), dedicated short range communication (DSRC), Bluetooth^{™}, RFID (Radio Frequency Identification), Infrared Data Association (IrDA), ZigBee, Near Field Communication (NFC), etc., or a wired communication technology such as a local area network (LAN), a wide area network (WAN), a metropolitan area network (MAN), and Ethernet, etc.

According to various embodiments, the input device 120 transmits a command or data to be used to a component (for example, the processor 180) of the cooking appliance 100 from the outside (e.g., a user) of the cooking appliance 100. For example, the input device 120 may include a button for inputting a cooking start signal, a button for selecting a cooking method (e.g., cooking time, output level, etc.), or the like. However, this is only an example, and the embodiment of the present disclosure is not limited thereto. For example, the input device 120 may be implemented as a microphone, a touch sensor, or the like.

According to various embodiments, the information collection device 130 may obtain various types of data to be used in the component (e.g., the processor 180) of the cooking appliance 100. According to the embodiment, the information collection device 130 may obtain learning data for model learning, an input data to be used when obtaining an output by using the learning model, etc. In this case, the information collection device 130 may obtain raw input data, and the processor 180 or the learning processor 150 may extract input features by preprocessing the input data. For example, the information collection device 130 may include at least one sensor such as an image sensor, an ultrasonic sensor, a proximity sensor, a weight sensor, or an optical sensor for inputting an image signal. However, the information collection device 130 is not limited thereto.

According to various embodiments, the output device 140 may generate an output related to visual, auditory, or tactile senses. The output device 140 may include a display and/or LED for outputting visual information, a speaker for outputting auditory information, a haptic module for outputting tactile information, and the like.

According to various embodiments, the learning processor 150 may be configured to perform data mining, data analysis, intelligent decision making, and a machine learning algorithm, and to receive, classify, store, and output information to be used for the technologies.

According to the embodiment, the learning processor 150 may include one or more memory units configured to store data received, detected, sensed, generated, predefined, or in another way output by the cooking appliance 100 or data received, detected, detected, generated, predefined, or in another way output by another component, device, electronic device or a device in communication with the electronic device. For example, the learning processor 150 may be implemented by using the memory 160 that is integrated with or implemented in the cooking appliance 100. For another example, the learning processor 150 may be implemented by using an external memory coupled directly to the cooking appliance 100 or by using a memory maintained in a server communicating with the cooking appliance 100. For another example, the learning processor 150 may be implemented by using a memory maintained in a cloud computing environment or by using another remote memory location accessible by the cooking appliance 100 through a communication method such as a network. For another example, the learning processor 150 may be integrated with the processor 180 of the cooking appliance 100.

According to the embodiment, the learning processor 150 may be generally configured such that data is stored in one or more databases in order that the data is identified, indexed, categorized, manipulated, stored, retrieved and output for the purpose that data is used in supervised learning, unsupervised learning, reinforcement learning, data mining, predictive analytics or in other electronic devices.

For example, through use of any of a variety of types of data analysis algorithms and machine learning algorithms, the information stored by the learning processor 150 may be used by the component (e.g., the processor 180) of the cooking appliance 100. Examples of such algorithms may include k-nearest neighbor system, fuzzy logic (e.g., probability theory), neural network, Boltzmann machine, vector quantization, pulse neural network, support vector machine, maximum margin classifier, hill climbing, inductive logic system Bayesian network, Petri Net (e.g., finite state machine, Mealy machine, Moore finite state machine), classifier tree (e.g., perceptron tree, support vector tree, Markov tree, decision tree forest, random forest), stake model and system, artificial fusion, sensor fusion, image fusion, reinforcement learning, augmented reality, pattern recognition, automated planning, and the like.

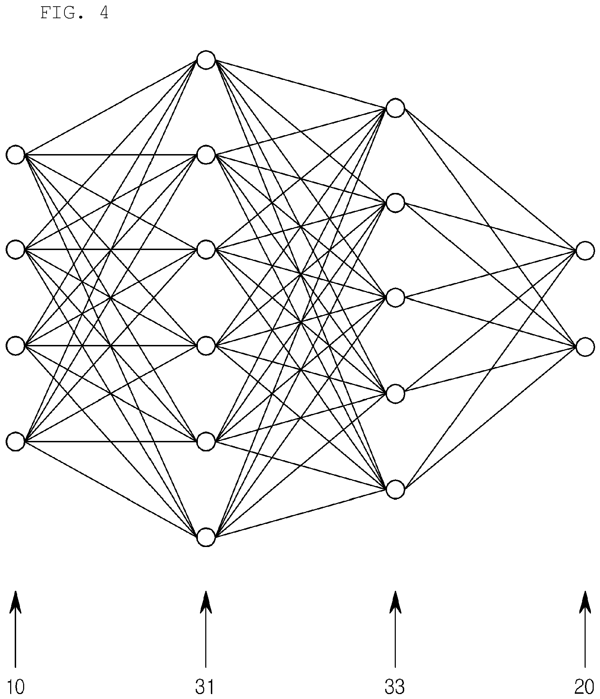

According to the embodiment, the learning processor 150 may store an artificial neural network (ANN) model used in the machine learning algorithm in the memory 160, generate the learning model obtained by training the artificial neural network model and store the learning model in the memory 160. In addition, the learning processor 140 may perform tasks such as classification, detection, and recognition based on data input by using the learning model. The artificial neural network is a model used in machine learning and may mean all of the models which have a problem-solving ability and are composed of artificial neurons (nodes) that form a network by synaptic connections. The artificial neural network may be defined by a connection pattern between neurons of different layers, a learning process for updating model parameters, and an activation function for generating an output value. For example, as will be described later with reference to FIG. 4, the artificial neural network may include a fully connected artificial neural network structure.

According to the embodiment, the learning processor 150 may train models 161a and 161b composed of artificial neural networks by using the learning data. For example, the learning processor 150 may train the models 161a and 161b composed of a plurality of artificial neural networks. In this case, the learning data for each model may vary depending on the purpose of each model. Here, the trained artificial neural network may be referred to as a learning model. The learning model may be implemented in hardware, software, or by a combination of hardware and software. The learning model may be used to infer a result value for a new input data instead of the learning data and may be used as a basis for determination to perform a certain operation. According to the embodiment, the learning processor 150 may perform the artificial intelligence processing together with the learning processor 240 of the AI server 200.

According to various embodiments, the memory 160 may store data supporting various functions of the cooking appliance 100. For example, the memory 160 may store input data obtained by the input device 120 and/or the information collection device 130, learning data, a learning model, a learning history, instructions for the learning processor 150, instructions for the processor 180, and a model (or an artificial neural network), etc., which is being trained or has been trained through the learning processor 150.

According to various embodiments, the driving device 170 may include at least one heat source that radiates heat by inputting electricity. For example, the at least one heat source may include at least one of a magnetron or a heater. Also, additionally or selectively, the driving device 170 may include at least one fan for flowing air inside the cooking appliance 100 or a power supply that is driven to supply power to the cooking appliance 100.

According to various embodiments, the processor 180 may be configured to control the overall operation of the cooking appliance 100. According to the embodiment, the processor 180 executes software (e.g., a program) stored in the memory 160, thereby controlling at least one of components (e.g., the communication circuit 110, the input device 120, the information collection device 130, the output device 140, the learning processor 150, the memory 160, or the driving device 170) connected to the processor 180. For example, the processor 180 may include a processor having an arithmetic processing function. For example, the processor 180 may include a processor having a calculation processing function. For example, the processor 180 includes an arithmetic processing unit such as a central processing unit (CPU), a microcomputer unit (MCU), a graphics processing unit (GPU), or the like. However, the processor 180 is not limited thereto.

According to various embodiments, the processor 180 may recognize a cooking method from an image of a product to be cooked and may control the following operations for applying the cooking method to a cooking operation.

According to the embodiment, the processor 180 may obtain an image of at least one product to be cooked. The processor 180 may obtain, through the information collecting device 130 of the cooking appliance 100, at least one image of the product to be cooked. For example, as shown in FIG. 6A, the information collection device 130 may be disposed outside (see reference numeral 610) the cooking appliance 100 or may be disposed (see reference numeral 620) inside the cooking appliance 100. For example, on a right front panel of a door 611 provided on the front of the main body, the information collection device 130 may include an input device (e.g., a cooking time setting dial 613 and a plurality of input buttons 615), an output device 617, and an image sensor 619 disposed together with the input device and the output device 617. For another example, the information collection device 130 may include an image sensor 623 that is disposed on the top of an interior 621 of the cooking appliance 100 and is exposed when the door 611 is opened. However, the arrangement of the information collection device 130 is not limited thereto.

According to the embodiment, the processor 180 may obtain cooking information from the obtained image. The cooking information may include a cooking method printed on the packaging of the product to be cooked, etc. For example, the processor 180 may obtain the cooking information from the image on the basis of optical character recognition. For example, as shown in FIG. 6B, at least a portion of texts 644 (e.g., use the microwave for about one minute) including at least one of the cooking appliance, cooking temperature, and cooking time may be obtained as cooking information from an image 642 by the processor 180.

According to the embodiment, in response to obtaining the cooking information, the processor 180 may start cooking based on the cooking information. For example, the processor 180 may control the driving device 170 such that cooking is automatically performed according to at least one of the cooking temperature or cooking time obtained from the image. In addition, selectively or additionally, the processor 180 may notify a user of the obtained cooking information before starting cooking. In this case, the processor 180 may receive a user input and perform cooking.

According to the embodiment, when the obtainment of the cooking information fails, the processor 180 may obtain the cooking information from at least one external device (e.g., the AI server 200, the robot 100a, the vehicle 100b, the XR device 100c, the smartphone 100d, or the home appliance 100e shown in FIG. 1). For example, the at least one external device may have an optical character recognition capability higher than that of the cooking appliance 100. For example, the processor 180 may transmit at least one image obtained through the information collection device 130 to at least one external device, and may receive the cooking information obtained from the external device in response to the transmission.

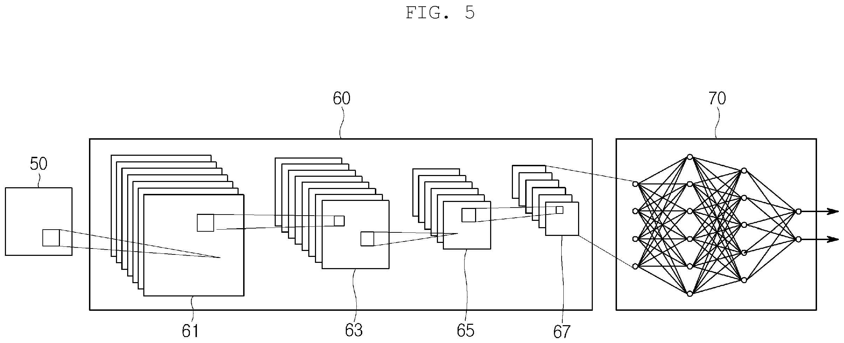

FIG. 4 shows an example of a fully connected artificial neural network structure. FIG. 5 shows an example of a convolutional neural network (CNN) structure that is a type of a deep neural network.

Referring to FIG. 4, the artificial neural network may include an input layer 10, an output layer 20, and optionally one or more hidden layers 31 and 33. Each layer includes one or more neurons which correspond to the neurons in the neural network, and the artificial neural network may include a synapse that links a node in one layer with a node in another layer. In the artificial neural network, a node may receive input signals input through the synapse, and generate an output value based on an activation function of a weight and a bias for each input signal. The output value of each node may act as an input signal to the next layer through the synapse. An artificial neural network in which all the nodes of one layer and all the nodes of the next layer are connected through the synapses may be referred to as a fully connected artificial neural network.

Parameters of the artificial neural network model may mean parameters determined by learning, and may include the weight of the synaptic connections and bias of neurons, etc. In addition, a hyper parameter may mean a parameter to be set before learning in the machine learning algorithm, and may include a learning rate, the number of times of the repetition, a mini batch size, an initialization function, and the like.

Machine learning, which is implemented by a deep neural network (DNN) including a plurality of hidden layers of artificial neural networks, is called deep learning, and the deep learning is part of the machine learning. Hereinafter, the machine learning may be used as meaning the deep running.

According to the embodiment, the deep neural network may include a convolutional neural network (CNN). A convolutional neural network structure shown in FIG. 3 may be more effective in identifying structural spatial data such as images, moving pictures, and character strings. The convolutional neural network can effectively recognize features associated with adjacent images while maintaining spatial information of the image. For example, as shown in FIG. 5, the convolutional neural network may include a feature extraction layer 60 and a classification layer 70. The feature extraction layer 60 may synthesize those located spatially close in the image by using convolution and then extract the features of the image.

The feature extraction layer 60 may be configured by stacking a plurality of convolution layers 61 and 65 and a plurality of pooling layers 63 and 67. By the convolution layers 61 and 65, the activation function may be applied after a filter is applied to input data. The convolution layers 61 and 65 may include a plurality of channels. By each of the channels, different filters and/or different activation functions may be applied. The result of the convolution layers 61 and 65 may be a feature map. The feature map may be data in the form of a two-dimensional matrix. The pooling layers 63 and 67 may receive output data of the convolution layers 61 and 65, that is, the feature map, as an input, and may be used to reduce the size of the output data or to emphasize specific data. The pooling layers 63 and 67 may generate output data by applying a max pooling function which selects the maximum value among some data of the output data of the convolution layers 61 and 65, an average pooling function which selects an average value, and a min pooling function which selects the minimum value.

The feature map which is generated through a series of the convolution layers and the pooling layers may become gradually smaller in size. A final feature map generated through the last convolution layer and the last pooling layer may be converted to have a one-dimensional form and be input to the classification layer 70. The classification layer 70 may have the fully connected artificial neural network structure shown in Fig. 4. The number of input nodes in the classification layer 70 may be equal to a number obtained by multiplying the number of elements of a matrix of the final feature map by the number of channels.

In addition to the above-described convolutional neural network, a recurrent neural network (RNN), a long short-term memory (LSTM) network, and gated recurrent units (GRU) may be also used as the deep neural network structure. The recurrent neural network can classify or predict by learning sequential data. The recurrent neural network has a recurrent structure therein, so that the learning of the past time is multiplied by a weight and is reflected in the current learning. Thus, the current output result is affected by the output result from the past time, and the hidden layer performs a kind of memory function. The recurrent neural network may be used to analyze a voice waveform and to perform a machine translation, may be used to identify front and back components of a text sentence, and to generate a text, or may be used to recognize voices.

The purpose of artificial neural network learning is regarded as determining a model parameter that minimizes a loss function. The loss function may be used as an index for determining an optimal model parameter in the learning process of the artificial neural network. In the case of a fully connected artificial neural network, the weight of each synapse may be determined by learning. In the case of the convolutional neural network, a filter of the convolution layer for extracting the feature map may be determined by learning.

The machine learning may be classified into supervised learning, unsupervised learning, and reinforcement learning on the basis of a learning method.

The supervised learning may refer to a method of training the artificial neural network in a state in which a label for learning data is given. The label may mean a correct answer (or a result value) that the artificial neural network must infer when the learning data is input to the artificial neural network. The unsupervised learning may refer to a method of training the artificial neural network in a state in which a label for learning data is not given. The reinforcement learning may refer to a learning method of training an agent defined in a certain environment to select a behavior or a behavior sequence that maximizes the cumulative reward in each state.

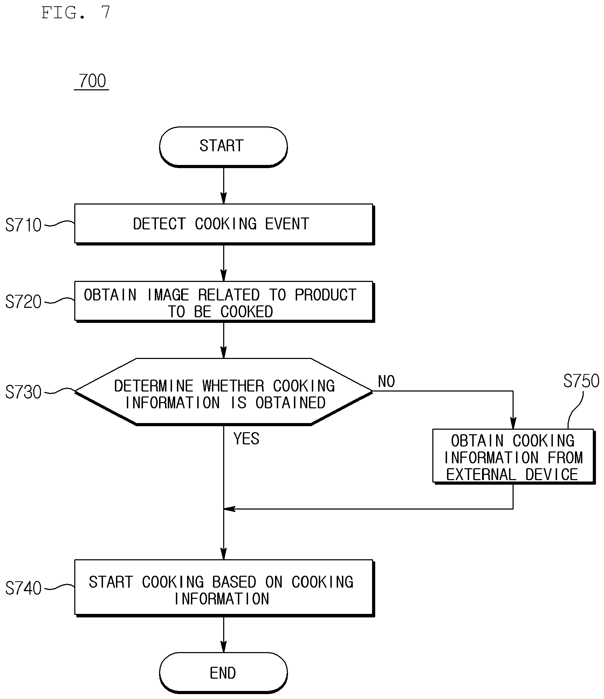

FIG. 7 is a flowchart showing an operation method of the cooking appliance 100 (e.g., the artificial intelligence cooking appliance) according to the embodiments of the present disclosure. In the following embodiment, respective operations may be sequentially performed, and may not be necessarily performed sequentially. In addition, the following operations may be performed by the processor 180 of the cooking appliance 100 or may be implemented with instructions that can be executed by the processor 180.

Referring to FIG. 7, the cooking appliance 100 according to various embodiments may detect a cooking event in step S710. According to the embodiment, the cooking event may be a situation in which at least one product to be cooked is being cooked by using the cooking appliance 100. For example, the cooking event may be a situation in which an operation button of the information collection device 130 disposed outside the cooking appliance 100 is input or the information collection device 130 detects that the product to be cooked is approaching. For another example, the cooking event may include a situation in which the product to be cooked is detected by the information collecting device 130 disposed in the interior space of the cooking appliance 100.

The cooking appliance 100 according to various embodiments may obtain, in step S720, an image related to the product to be cooked in response to the detection of the cooking event. According to the embodiment, the cooking appliance 100 may capture the product to be cooked, and thus, may obtain an image of the product to be cooked. For example, the obtained image may include at least one of the packaging of the product to be cooked, the logo (e.g., a name of the product) of the product to be cooked, or the contents of the product to be cooked. However, the present disclosure is not limited thereto.

The cooking appliance 100 according to various embodiments may determine, in step S730, whether the cooking information is obtained from the image through the optical character recognition in response to the detection of the cooking event. The cooking information may include a cooking method printed on the packaging of the product to be cooked, etc. According to the embodiment, the cooking appliance 100 may obtain a text related to at least one of the cooking appliance, cooking temperature, and cooking time as the cooking information from the image. According to another embodiment, the cooking appliance 100 may store the cooking method in the memory 160 in association with the packaging, logo, name or contents of the product to be cooked. In addition, in the case where the cooking appliance 100 fails to obtain the cooking information through the optical character recognition from the obtained image, when the cooking method corresponding to the packaging, logo, name or contents of the product to be cooked included in the obtained image is stored in the memory 160, the corresponding cooking method may be obtained from the memory 160.

In response to success in obtaining the cooking information, the cooking appliance 100 according to various embodiments may start cooking based on the cooking information in step S740. According to the embodiment, the cooking appliance 100 may control the driving device 170 such that cooking is automatically performed according to at least one of the cooking temperature or cooking time obtained from the image.

The cooking appliance 100 according to various embodiments of the present disclosure may obtain the cooking information from at least one external device in step S750 in response to failing to obtain the cooking information. According to the embodiment, an AI technology is applied to the at least one external device, and the at least one external device may include at least one of the AI server 200, the robot 100a, the vehicle 100b, the XR device 100c, the smartphone 100d, or the home appliance 100e shown in FIG. 1. For example, the cooking appliance 100 may transmit the at least one image obtained through the information collection device 130 to the at least one external device, and may receive the cooking information obtained by the external device in response to the transmission. In this case, in step S740, the cooking appliance 100 may start cooking based on the cooking information obtained from the external device. According to the embodiment, the at least one image and the cooking information may be transmitted and received through a wired communication (e.g., a local area network (LAN)) channel or a wireless communication (e.g., 5G, LTE, Bluetooth, Wi-Fi, etc.) channel that is formed between the cooking appliance 100 and the external device.

As described above, the cooking appliance 100 according to various embodiments recognizes the cooking method printed on the packaging of the product and performs the cooking operation, so that the cooking appliance 100 can be automatically controlled according to a cooking method recommended for the product to be cooked, without storing a separate recipe which defines the product to be cooked and the cooking method.

According to various embodiments, at least one of the operations of the cooking appliance 100 described with reference to FIG. 7 may be omitted or another operation may be added. According to the embodiment, the operation in step S750 of the cooking appliance 100 may be omitted. The cooking appliance 100 may additionally notify the user of the cooking information obtained before performing the step S740 and/or receive a user input that instructs the start of cooking.

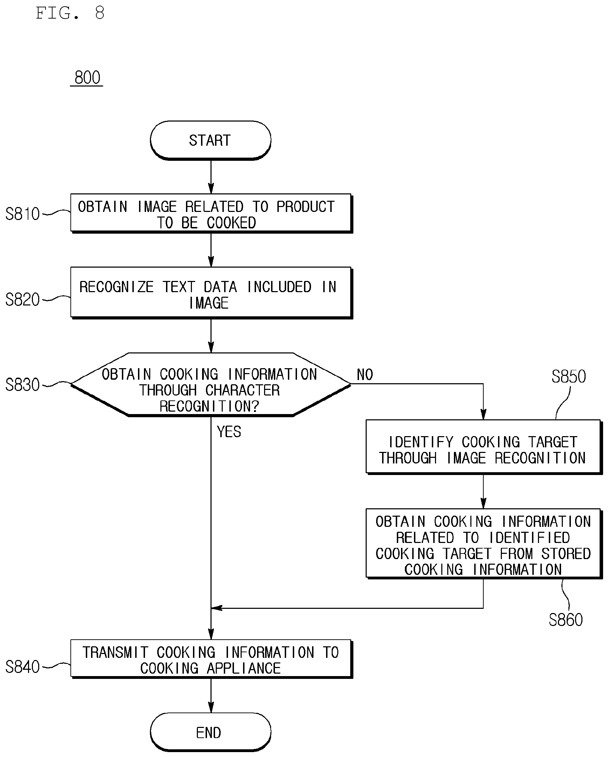

FIG. 8 is a flowchart showing an operation method of at least one external device according to the embodiments of the present disclosure. In addition, at least one external device mentioned in the following description is a device capable of establishing communication with the cooking appliance 100, and may include at least one of the AI server 200, the robot 100a, the vehicle 100b, the XR device 100c, the smartphone 100d, or the home appliance 100e. In the following embodiment, respective operations may be sequentially performed, and may not be necessarily performed sequentially. In addition, the following operations may be performed by a processor of the at least one external device or may be implemented with instructions that can be executed by the processor.

Referring to FIG. 8, in step S810, the external device (e.g., the AI server 200 or the smartphone 100d) according to various embodiments may obtain an image related to the product to be cooked. As described above with reference to FIG. 7, the image may include at least one of the packaging of the product to be cooked, the logo (e.g., a name of the product) of the product to be cooked, or the contents of the product to be cooked. However, the present disclosure is not limited thereto. According to the embodiment, the external device may obtain the image related to the product to be cooked, by using the information collecting device (e.g., an image sensor) provided in the external device. According to another embodiment, the external device may receive the image related to the product to be cooked, from at least one cooking appliance 100 with which communication is established.

In step S820, the external device (e.g., the AI server 200 or the smartphone 100d) according to various embodiments may recognize text data included in the image. According to the embodiment, the external device recognizes the cooking method printed on the packaging of the product to be cooked, etc., thereby obtaining the cooking information.

In step S830, the external device (e.g., the AI server 200 or the smartphone 100d) according to various embodiments may determine whether the cooking information is obtained through the optical character recognition. According to the embodiment, the external device may determine whether texts associated with at least one of the cooking appliance, cooking temperature, and cooking time are recognized from the image.

In step S840, the external device (e.g., the AI server 200 or the smartphone 100d) according to various embodiments may transmit the cooking information obtained through the image to the cooking appliance 100 in response to success in obtaining the cooking information through the optical character recognition. According to the embodiment, the external device may transmit the cooking information to the cooking appliance 100 that has requested the cooking information. According to another embodiment, the external device may determine a target device as a target to be cooked on the basis of the cooking information and may transmit the cooking information to the determined target device. For example, when the external device obtains the cooking information "Use the microwave for about one minute" from the image, the external device may determine the microwave as a target device and transmit the cooking information "about one minute".

In step S850, the external device (e.g., the AI server 200 or the smartphone 100d) according to various embodiments may identify a cooking target through image recognition in response to failing to obtain the cooking information through the optical character recognition. According to the embodiment, the external device may obtain, as an image recognition result, the logo (e.g., a name of the product) of the product to be cooked or the contents of the product to be cooked, and on the basis of this, may identify the cooking target.

In step S860, the external device (e.g., the AI server 200 or the smartphone 100d) according to various embodiments may obtain the cooking information related to the identified cooking target from the stored cooking information in response to the identification of the cooking target. According to the embodiment, the external device may store a separate recipe which defines the product to be cooked and the cooking method, and may obtain, as cooking information, a recipe corresponding to the cooking target from among the stored recipes. In this case, in step S840, the external device may transmit the cooking information obtained from the stored recipe to the cooking appliance 100. According to the embodiment, the external device may identify the cooking target through machine learning (e.g., deep learning) and may update the stored recipe.

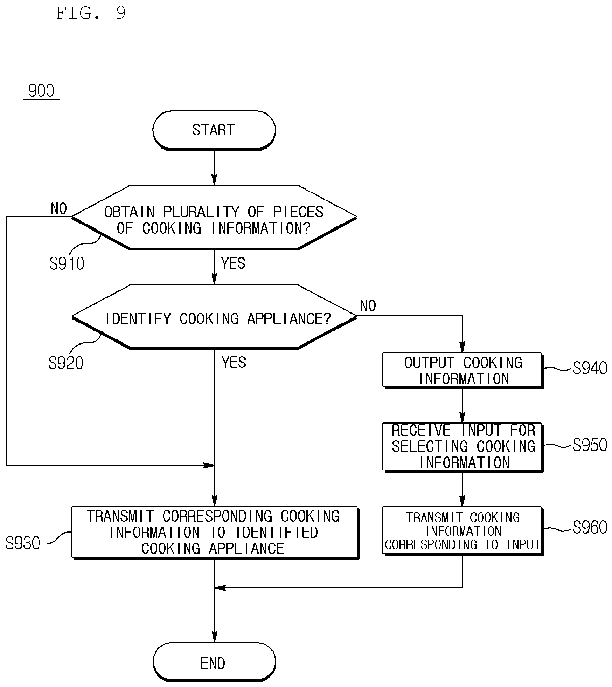

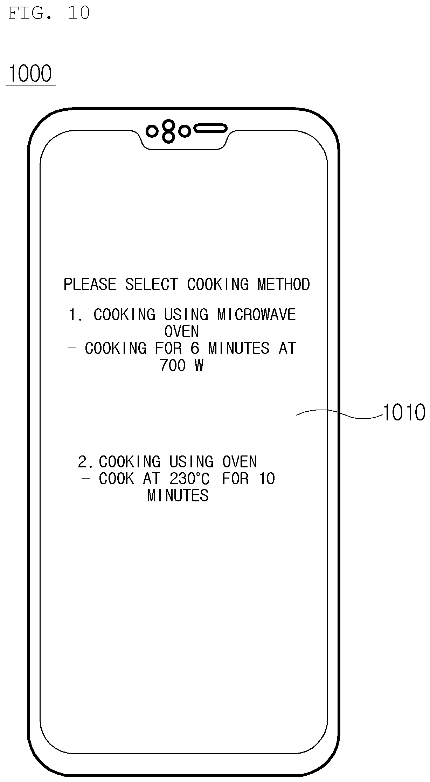

FIG. 9 is a flowchart 900 showing an operation in which the at least one external device according to the embodiments of the present disclosure transmits cooking information. FIG. 10 is a view 1000 for describing an operation in which the external device according to various embodiments of the present disclosure selects a target device. The operations of FIG. 9 described below may represent various embodiments of the operation of step S840 of FIG. 8. In addition, in the following embodiments, respective operations may not be necessarily performed sequentially, and at least one operation among the disclosed operations may be omitted or another operation may be added.

Referring to FIG. 9, in step S910, the external device (e.g., the AI server 200 or the smartphone 100d) according to various embodiments may determine whether a plurality of pieces of cooking information are obtained. The plurality of pieces of cooking information may be a method for cooking the product to be cooked, by using a plurality of the cooking appliances 100. For example, the situation in which the plurality of pieces of cooking information is obtained may be a situation in which a recognition result of the image including a first cooking method using a first cooking appliance (e.g., a microwave oven) and a second cooking method using a second cooking appliance (e.g., an oven) is obtained. Conversely, a situation in which the plurality of pieces of cooking information is not obtained may be a situation in which a recognition result of the image including a cooking method using the first cooking appliance (e.g., a microwave oven) or the second cooking appliance (e.g., an oven) is obtained.

In step S920, the external device (e.g., the AI server 200 or the smartphone 100d) according to various embodiments may determine whether the cooking appliance 100 is identified in response to obtaining the plurality of pieces of cooking information. According to the embodiment, the identification of the cooking appliance 100 may be related to whether or not the cooking information is requested. According to another embodiment, the identification of the cooking appliance 100 may be related to whether the target device is determined based on the cooking information.

In step S930, the external device (e.g., the AI server 200 or the smartphone 100d) according to various embodiments may transmit the obtained cooking information to the cooking appliance 100 in response to obtaining one piece of cooking information or identifying the cooking appliance 100. Here, as described above, the external device may transmit the cooking information to the cooking appliance 100 that has requested the cooking information or to the target device determined based on the cooking information.

The external device (e.g., the AI server 200 or the smartphone 100d) according to various embodiments may transmit the cooking information on the basis of a user input through steps S940 to S960 in response to not identifying the cooking appliance 100. According to the embodiment, the external device may output the obtained cooking information in step S940, and then may receive an input for selecting the cooking information in step S950. Also, the external device may transmit the cooking information corresponding to the input to the cooking appliance 100 in step S960. For example, as shown in FIG. 10, the external device may output first cooking information using a microwave oven and second cooking information 1010 using an oven, and may receive a user input for selecting at least one of these cooking information. Here, the external device may output the cooking information by using various output devices such as a display or a speaker. Also, the external device may receive various user inputs such as a touch input, a button input, a voice input, etc.

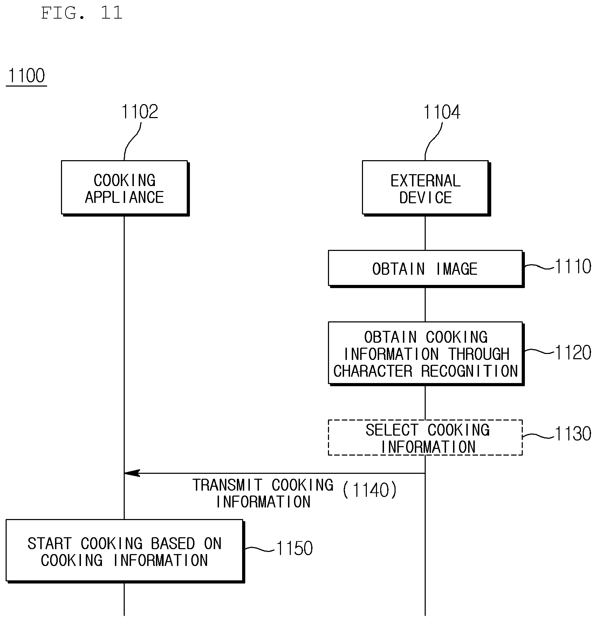

FIG. 11 is a view 1100 an operation in which a cooking system according to the embodiments of the present disclosure performing a cooking operation. The cooking system according to various embodiments may include a cooking appliance 1102 (e.g., the cooking appliance 100) and an external device 1104 (e.g., the AI server 200 or the smartphone 100d)).

Referring to FIG. 11, according to various embodiments, in step 1110, the external device 1104 may obtain at least one image. According to the embodiment, the external device 1104 may obtain an image related to the product to be cooked, by using the information collecting device (e.g., an image sensor) provided in the external device 1104. Such an image may include at least one of the packaging of the product to be cooked, the logo (e.g., a name of the product) of the product to be cooked, or the contents of the product to be cooked. However, the present disclosure is not limited thereto.

According to various embodiments, in step 1120, the external device 1104 may obtain the cooking information through the optical character recognition. Here, the external device 1104 recognizes the cooking method from an image obtained by capturing the packaging of the product to be cooked, thereby obtaining the cooking information.

According to various embodiments, selectively in step 1120, the external device 1104 may select the cooking information. According to the embodiment, the external device 1104 may select the cooking information to be transmitted to the cooking appliance 1102 from among a plurality of pieces of cooking information obtained through the optical character recognition. In this case, the external device 1104 may perform an operation of outputting the obtained cooking information and an operation of receiving the user input for selecting one of the output cooking information.

According to various embodiments, in step 1140, the external device 1104 may transmit the cooking information to the cooking appliance 1102. According to the embodiment, the external device 1104 may transmit the cooking information through a wired communication channel or a wireless communication channel.

According to various embodiments, in step 1150, the cooking appliance 1102 may perform cooking on the basis of the cooking information received from the external device 1104. According to the embodiment, the cooking information may include time information and temperature information. However, this is only an example, and the embodiment of the present disclosure is not limited thereto. For example, the cooking information may further include various types of information necessary for cooking (e.g., information that induces a change in the position of a product during cooking). For example, the cooking appliance 1102 may set a cooking time to correspond to the time information included in the cooking information, may output the temperature information to correspond to the temperature information, and then may control the cooking to be performed according to the setting. Also, the cooking appliance 1102 may output guide information (e.g., please change the position of the product) for inducing an operation corresponding to the additional information during cooking.

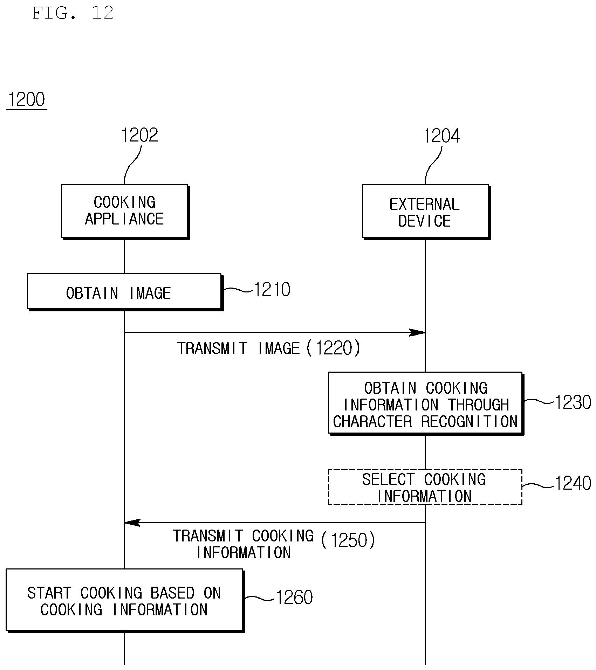

FIG. 12 is a view 1200 showing another operation in which the cooking system according to the embodiments of the present disclosure performing the cooking operation. The cooking system according to various embodiments may include a cooking appliance 1202 (e.g., the cooking appliance 100) and an external device 1204 (e.g., the AI server 200 or the smartphone 100d). The cooking system is different from the system shown in FIG. 11 in that the external device 1204 does not include a separate component for obtaining the image.

Referring to FIG. 12, according to various embodiments, in step 1210, the cooking appliance 1202 may obtain at least one image. According to the embodiment, the cooking appliance 1202 may obtain an image related to the product to be cooked, by using the information collecting device (e.g., an image sensor) provided in the cooking appliance 1202.

According to various embodiments, in step 1220, the cooking appliance 1202 may transmit the obtained image to the external device 1204. In step 1230, the external device 1204 may obtain the cooking information from the received image through the optical character recognition. According to the embodiment, the cooking appliance 1202 may transmit the image to the external device through a wired communication channel or a wireless communication channel.

According to various embodiments, selectively in step 1240, the external device 1204 may select the cooking information. According to the embodiment, the external device 1204 may select the cooking information to be transmitted to the cooking appliance 1202 from among a plurality of pieces of cooking information obtained through the optical character recognition. In this case, the external device 1204 may perform an operation of outputting the obtained cooking information and an operation of receiving the user input for selecting one of the output cooking information.

According to various embodiments, in step 1250, the external device 1204 may transmit the cooking information to the cooking appliance 1202. According to the embodiment, the external device 1204 may transmit the cooking information to the cooking appliance 1202 through a wired communication channel or a wireless communication channel.

According to various embodiments, in step 1260, the cooking appliance 1202 may perform cooking on the basis of the cooking information received from the external device 1204. According to the embodiment, the cooking appliance 1202 may control the cooking to be performed according to at least one of the time information, temperature information, and additional information included in the cooking information.

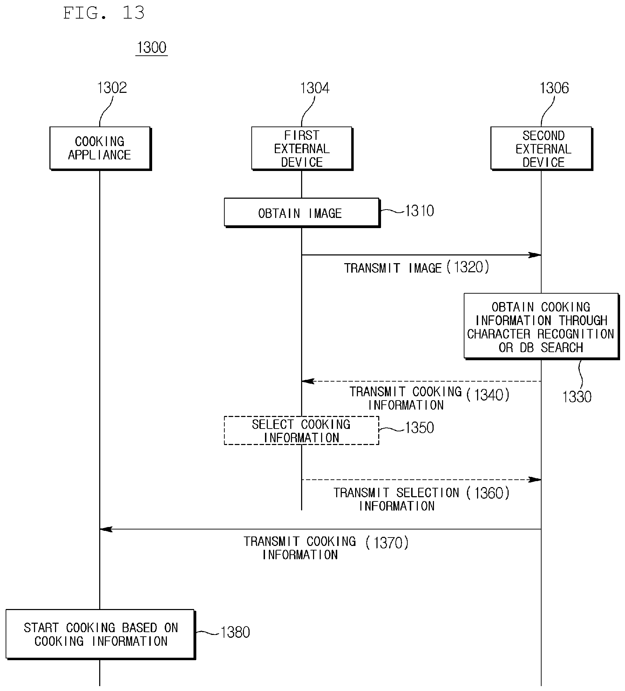

FIG. 13 is a view 1300 showing further another operation in which the cooking system according to the embodiments of the present disclosure performing the cooking operation. The cooking system according to various embodiments may include a cooking appliance 1302 (e.g., the cooking appliance 100), a first external device 1304 (e.g., the smartphone 100d), and a second external device 1306 (e.g., the AI server 200). Also, the first external device 1304 may include a separate component (e.g., an image sensor) for obtaining the image, and the second external device 1306 may have image recognition capability.

Referring to FIG. 13, according to various embodiments, in step 1310, the first external device 1304 may obtain at least one image. According to the embodiment, the first external device 1304 may obtain an image related to the product to be cooked, by using the information collecting device provided in the first external device 1304.

According to various embodiments, in step 1320, the first external device 1304 may transmit the obtained image to the second external device 1306. According to the embodiment, the first external device 1304 may transmit the image through a wired communication channel or a wireless communication channel.

According to various embodiments, in step 1330, the second external device 1306 may obtain the cooking information from the received image. According to the embodiment, the second external device 1306 may obtain the cooking information through the optical character recognition of the image. According to another embodiment, the second external device may identify a cooking target through the image recognition and may obtain the cooking information related to the identified cooking target from among the stored cooking information.

According to various embodiments, selectively in step 1340, the second external device 1306 may transmit the obtained cooking information to the first external device 1304. According to the embodiment, the second external device 1306 may transmit the cooking information through a wired communication channel or a wireless communication channel.

According to various embodiments, selectively in step 1350, the first external device 1304 may select the cooking information. According to the embodiment, the first external device 1304 may select the cooking information to be transmitted to the cooking appliance 1302 from among a plurality of pieces of cooking information obtained by the second external device 1306. In this case, the first external device 1304 may perform an operation of outputting the obtained cooking information and an operation of receiving the user input for selecting one of the output cooking information.

According to various embodiments, selectively in step 1360, the first external device 1304 may transmit selection information indicating the selected cooking information to the second external device 1306. According to the embodiment, the first external device 1304 may transmit the selection information through a wired communication channel or a wireless communication channel.

According to various embodiments, in step 1370, the second external device 1306 may transmit the cooking information to the cooking appliance 1302 on the basis of the received selection information. According to the embodiment, the second external device 1306 may transmit the cooking information through a wired communication channel or a wireless communication channel.

According to various embodiments, in step 1380, the cooking appliance 1302 may perform cooking based on the cooking information received from the second external device 1306. According to the embodiment, the cooking appliance 1302 may control the cooking to be performed according to at least one of the time information, temperature information, and additional information included in the cooking information.

The artificial intelligence cooking appliance (e.g., the cooking appliance 100) according to various embodiments of the present disclosure may include a driving device (e.g., the driving device 170 of FIG. 3) for cooking a product to be cooked; an image sensor (e.g., the information collection device 130 of FIG. 3) configured to obtain an image related to the product to be cooked; and at least one processor (e.g., the processor 180 and/or learning processor 150 of FIG. 3) connected operatively to the driving device and the image sensor. According to the embodiment, the at least one processor controls the cooking appliance to obtain the image related to the product to be cooked, to obtain cooking information of the product to be cooked, on the basis of the image, and to cook the product to be cooked, on the basis of the cooking information. For example, the cooking information includes at least one of time information or temperature information.

According to various embodiments, the artificial intelligence cooking appliance may further include a memory operatively connected to the at least one processor. The memory may store a cooking method in association with at least one of a packaging of the product, a logo of the product, a name of the product, or contents of the product. The at least one processor may control the cooking appliance to recognize text data included in the obtained image and obtain the cooking information, or controls the cooking appliance to obtain the cooking information by reading, from the memory, the cooking information corresponding to the at least one of the packaging of the product to be cooked, the logo of the product to be cooked, the name of the product to be cooked, or the contents of the product to be cooked which are included in the obtained image.

According to various embodiments, the at least one processor may control the cooking appliance to recognize the text data by using a trained artificial neural network model or to determine whether the obtained image includes the at least one of the packaging of the product to be cooked, the logo of the product to be cooked, the name of the product to be cooked, or the contents of the product to be cooked.

According to various embodiments, the artificial intelligence cooking appliance may further include a communication circuit configured to be operatively connected to the at least one processor and to perform data communication with at least one external device. The at least one processor may control the cooking appliance to transmit the obtained image to the at least one external device when failing to obtain the cooking information from the obtained image, and controls the cooking appliance to receive the cooking information from the at least one external device, in response to the transmission.

According to various embodiments, the at least one processor may control the cooking appliance to obtain the cooking information by recognizing a cooking method printed on the packaging of the product to be cooked.

An electronic device (e.g., the AI server 200 or the smartphone 100d) according to various embodiments of the present disclosure may include: a communication circuit configured to perform data communication with at least one cooking appliance; and at least one processor connected operatively to the communication circuit. According to the embodiment, the at least one processor may control the electronic device to obtain an image related to a product to be cooked, to obtain, from the obtained image, cooking information of the product to be cooked, and to transmit the obtained cooking information to the at least one cooking appliance. For example, the cooking information includes at least one of time information or temperature information.

According to various embodiments, the electronic device may further include an image sensor operatively connected to the at least one processor. The at least one processor may control the electronic device to receive, from the at least one cooking appliance, the image related to the product to be cooked, or to obtain, by using the image sensor, the image related to the product to be cooked.

According to various embodiments, the electronic device may further include a memory operatively connected to the at least one processor. The memory may store a cooking method in association with at least one of a packaging of the product, a logo of the product, a name of the product, or contents of the product. The at least one processor may control the electronic device to recognize text data included in the obtained image and obtain the cooking information, or controls the cooking appliance to obtain the cooking information by reading, from the memory, the cooking information corresponding to the at least one of the packaging of the product to be cooked, the logo of the product to be cooked, the name of the product to be cooked, or the contents of the product to be cooked which are included in the obtained image.

According to various embodiments, the at least one processor may control the electronic device to recognize the text data by using a trained artificial neural network model, or to determine whether the image includes the at least one of the packaging of the product to be cooked, the logo of the product to be cooked, the name of the product to be cooked, or the contents of the product to be cooked.

According to various embodiments of the present disclosure, when a plurality of pieces of the cooking information is obtained for the product to be cooked, the at least one processor may control the electronic device to select one of the plurality of pieces of cooking information and may control the electronic device to transmit the selected cooking information to a cooking appliance corresponding to the selected cooking information among the at least one cooking appliance. For example, the plurality of pieces of cooking information may include first cooking information related to a first cooking appliance and second cooking information related to a second cooking appliance.

According to various embodiments, the at least one processor may control the electronic device to output the plurality of pieces of cooking information such that a user recognizes it and to receive a user's input for selecting one of the plurality of pieces of the output cooking information, so that the one of the plurality of pieces of cooking information is selected.

According to various embodiments, the at least one processor may control the electronic device to request the cooking information by transmitting the image to a server that has established communication with the external device.

An operation method of an artificial intelligence cooking appliance (e.g., the cooking appliance 100) according to various embodiments of the present disclosure may include: obtaining an image related to a product to be cooked; obtaining cooking information of the product to be cooked, on the basis of the obtained image; and cooking the product to be cooked, on the basis of the cooking information. For example, the cooking information may include at least one of time information or temperature information.

According to various embodiments, the obtaining the cooking information of the product to be cooked, on the basis of the obtained image may include at least one of recognizing text data included in the obtained image and obtaining the cooking information; or obtaining the cooking information by reading, from a memory, the cooking information corresponding to at least one of a packaging of the product to be cooked, a logo of the product to be cooked, a name of the product to be cooked, or contents of the product to be cooked which are included in the obtained image.

According to various embodiments, the obtaining the cooking information of the product to be cooked, on the basis of the obtained image may further include at least one of recognizing the text data by using a trained artificial neural network model; or determining, by using the trained artificial neural network model, whether the obtained image includes the at least one of the packaging of the product to be cooked, the logo of the product to be cooked, the name of the product to be cooked, or the contents of the product to be cooked.

According to various embodiments, when the obtaining the cooking information from the obtained image fails, the operation method of an artificial intelligence cooking appliance may further include transmitting the obtained image to at least one external device; and receiving the cooking information from the at least one external device, in response to the transmission.

According to various embodiments, the obtaining the cooking information may include recognizing a cooking method printed on the packaging of the product to be cooked.

An operation method of an electronic device (e.g., the AI server 200 or the smartphone 100d) according to various embodiments of the present disclosure may include: obtaining an image related to a product to be cooked; obtaining cooking information of the product to be cooked, on the basis of the obtained image; and transmitting the obtained cooking information to at least one cooking appliance. For example, the cooking information may include at least one of time information or temperature information.

According to various embodiments, the obtaining the image related to a product to be cooked may include at least one of receiving, from the at least one cooking appliance, the image related to the product to be cooked; or obtaining, by using an image sensor, the image related to the product to be cooked.

According to various embodiments, the obtaining the image related to the product to be cooked may include transmitting the image related to the product to be cooked to a server that has established data communication with the electronic device; and receiving, from the server, the cooking information of the product to be cooked.

According to various embodiments, the obtaining the cooking information of the product to be cooked, on the basis of the obtained image may include at least one of recognizing text data included in the obtained image and obtaining the cooking information; or obtaining the cooking information by reading, from a memory, the cooking information corresponding to at least one of a packaging of the product to be cooked, a logo of the product to be cooked, a name of the product to be cooked, or contents of the product to be cooked which are included in the obtained image.

According to various embodiments, the obtaining the cooking information of the product to be cooked, on the basis of the obtained image may further include at least one of recognizing the text data by using a trained artificial neural network model; or determining whether the obtained image includes the at least one of the packaging of the product to be cooked, the logo of the product to be cooked, the name of the product to be cooked, or the contents of the product to be cooked.

According to various embodiments, the obtaining the cooking information of the product to be cooked, on the basis of the obtained image may include selecting, when a plurality of pieces of the cooking information is obtained for the product to be cooked, one of the plurality of pieces of cooking information. The transmitting the obtained cooking information to at least one cooking appliance may include transmitting the selected cooking information to a cooking appliance corresponding to the selected cooking information among the at least one cooking appliance. For example, the plurality of pieces of cooking information may include first cooking information related to a first cooking appliance and second cooking information related to a second cooking appliance.

According to various embodiments, the selecting one of the plurality of pieces of cooking information may include: outputting the plurality of pieces of cooking information such that a user recognizes it; and receiving a user's input for selecting one of the plurality of pieces of the output cooking information.

According to various embodiments, the image may include an image obtained by capturing the packaging of the product to be cooked.

The cooking system using the artificial intelligence according to various embodiments of the present disclosure may include a server, an electronic device, and a cooking appliance that cooks according to the cooking information provided from the electronic device.

According to various embodiments, the electronic device may control to obtain an image related to a product to be cooked, to obtain, from the obtained image, cooking information of the product to be cooked, and to transmit the obtained cooking information to the at least one cooking appliance. For example, the cooking information includes at least one of time information or temperature information. For example, the electronic device may be a user terminal including a smartphone and a personal computer.

According to various embodiments, the electronic device may receive, from the cooking appliance, the image related to the product to be cooked or may obtain, by using an image sensor provided in the electronic device, the image related to the product to be cooked.

According to various embodiments, the electronic device may transmit the image related to the product to be cooked to the server and may obtain, from the server, the cooking information of the product to be cooked.

According to various embodiments, the server may recognize text data included in the obtained image and obtain the cooking information or may obtain the cooking information by reading, from a memory, the cooking information corresponding to the at least one of the packaging of the product to be cooked, the logo of the product to be cooked, the name of the product to be cooked, or the contents of the product to be cooked which are included in the obtained image. For example, the server may identify a cooking target by using image recognition using a trained artificial neural network and may obtain, as the cooking information, a recipe corresponding to the identified cooking target from among the stored recipes.

The operating method of the cooking appliance (e.g., the cooking appliance 100) according to the embodiments of the present disclosure is stored in a computer-readable storage medium and stored in a processor (e.g., the processor 180 or the running processor of FIG. 3) 150)) and may be implemented as instructions that can be executed by

In addition, the operation method of the electronic device (e.g., the AI server 200 or the smartphone 100d) according to the embodiments of the present disclosure may be implemented with instructions which are stored in a computer-readable storage medium and executed by the processor (e.g., the learning processor 240 or the processor 260 of FIG. 2).

Directly and/or indirectly and regardless of whether the storage media is in a raw state, in a formatted state, an organized state, or in any other accessible state, the storage media may include a relational database, a non-relational database, an in-memory database, and a database which can store a data and include a distributed type database, such as other suitable databases that allows access to the data through a storage controller. In addition, the storage medium includes a primary storage device, a secondary storage device, a tertiary storage device, an offline storage device, a volatile storage device, a nonvolatile storage device, a semiconductor storage device, a magnetic storage device, an optical storage device, and a flash storage devices, a hard disk drive storage device, a floppy disk drive, a magnetic tape, or any type of storage device such as other suitable data storage medium.

Although the present invention has been described with reference to the embodiment shown in the drawings, this is just an example and it will be understood by those skilled in the art that various modifications and equivalent thereto may be made. Therefore, the true technical scope of the present invention should be determined by the spirit of the appended claims.

## Claims

1. An artificial intelligence cooking appliance comprising:
a driving device for cooking a product to be cooked;
an image sensor configured to obtain an image related to the product to be cooked; and
at least one processor connected operatively to the driving device and the image sensor,
wherein the at least one processor controls the cooking appliance to obtain the image related to the product to be cooked, to obtain cooking information of the product to be cooked on the basis of the image, and to cook the product to be cooked on the basis of the cooking information, and
wherein the cooking information comprises at least one of time information or temperature information.

2. The artificial intelligence cooking appliance of claim 1, further comprising:
a memory operatively connected to the at least one processor,
wherein the memory stores a cooking method in association with at least one of a packaging of the product, a logo of the product, a name of the product, or contents of the product, and
wherein the at least one processor controls the cooking appliance to recognize text data comprised in the image and obtain the cooking information, or controls the cooking appliance to obtain the cooking information by reading, from the memory, the cooking information corresponding to the at least one of the packaging of the product to be cooked, the logo of the product to be cooked, the name of the product to be cooked, or the contents of the product to be cooked which are comprised in the image.

3. The artificial intelligence cooking appliance of claim 2, wherein the at least one processor controls the cooking appliance to recognize the text data or to determine whether the image comprises the at least one of the packaging of the product to be cooked, the logo of the product to be cooked, the name of the product to be cooked, or the contents of the product to be cooked by using a trained artificial neural network model.

4. The artificial intelligence cooking appliance of claim 1, further comprising:
a communication circuit configured to be operatively connected to the at least one processor and to perform data communication with at least one external device,
wherein the at least one processor controls the cooking appliance to transmit the image to the at least one external device when failing to obtain the cooking information from the image, and controls the cooking appliance to receive the cooking information from the at least one external device, in response to the transmission.

5. An electronic device comprising:
a communication circuit configured to perform data communication with at least one cooking appliance; and
at least one processor connected operatively to the communication circuit,
wherein the at least one processor controls the electronic device to obtain an image related to a product to be cooked, to obtain, from the image, cooking information of the product to be cooked, and to transmit the cooking information to the at least one cooking appliance, and
wherein the cooking information comprises at least one of time information or temperature information.

6. The electronic device of claim 5, further comprising:
an image sensor operatively connected to the at least one processor,
wherein the at least one processor controls the electronic device to receive, from the at least one cooking appliance, the image related to the product to be cooked, or to obtain, by using the image sensor, the image related to the product to be cooked.

7. The electronic device of claim 5, further comprising:
a memory operatively connected to the at least one processor,
wherein the memory stores a cooking method in association with at least one of a packaging of the product, a logo of the product, a name of the product, or contents of the product, and
wherein the at least one processor controls the electronic device to recognize text data comprised in the image and obtain the cooking information, or controls the cooking appliance to obtain the cooking information by reading, from the memory, the cooking information corresponding to the at least one of the packaging of the product to be cooked, the logo of the product to be cooked, the name of the product to be cooked, or the contents of the product to be cooked which are comprised in the image.

8. The electronic device of claim 7, wherein the at least one processor controls the electronic device to recognize the text data or to determine whether the image comprises the at least one of the packaging of the product to be cooked, the logo of the product to be cooked, the name of the product to be cooked, or the contents of the product to be cooked by using a trained artificial neural network model.

9. The electronic device of claim 5,
wherein, when a plurality of pieces of the cooking information is obtained for the product to be cooked, the at least one processor controls the electronic device to select one of the plurality of pieces of cooking information and controls the electronic device to transmit the selected cooking information to a cooking appliance corresponding to the selected cooking information among the at least one cooking appliance,
and wherein the plurality of pieces of cooking information comprises first cooking information related to a first cooking appliance and second cooking information related to a second cooking appliance.

10. The electronic device of claim 9, wherein the at least one processor controls the electronic device to output the plurality of pieces of cooking information such that a user recognizes it and to receive a user's input for selecting one of the plurality of pieces of the output cooking information, so that the one of the plurality of pieces of cooking information is selected.

11. The electronic device of claim 5, wherein the at least one processor controls the electronic device to transmit the image related to the product to be cooked to a server and to receive the cooking information from the server, in response to the transmission.

12. An operation method of an artificial intelligence cooking appliance, the operation method comprising:
obtaining an image related to a product to be cooked;
obtaining cooking information of the product to be cooked, on the basis of the image; and
cooking the product to be cooked, on the basis of the cooking information,
wherein the cooking information comprises at least one of time information or temperature information.

13. The operation method of claim 12, wherein the obtaining the cooking information of the product to be cooked, on the basis of the image comprises at least one of
recognizing text data comprised in the image and obtaining the cooking information; or
obtaining the cooking information by reading, from a memory, the cooking information corresponding to at least one of a packaging of the product to be cooked, a logo of the product to be cooked, a name of the product to be cooked, or contents of the product to be cooked which are comprised in the image.

14. The operation method of claim 13, wherein the obtaining the cooking information of the product to be cooked, on the basis of the image further comprises at least one of
recognizing the text data by using a trained artificial neural network model; or
determining, by using another trained artificial neural network model, whether the image comprises the at least one of the packaging of the product to be cooked, the logo of the product to be cooked, the name of the product to be cooked, or the contents of the product to be cooked.

15. The operation method of claim 12, further comprising, when the obtaining the cooking information from the image fails,
transmitting the image to at least one external device; and
receiving the cooking information from the at least one external device, in response to the transmission.

16. An operation method of an electronic device, the operation method comprising:
obtaining an image related to a product to be cooked;
obtaining cooking information of the product to be cooked, on the basis of the image; and
transmitting the cooking information to at least one cooking appliance,
wherein the cooking information comprises at least one of time information or temperature information.

17. The operation method of claim 16, wherein the obtaining the image related to a product to be cooked comprises at least one of
receiving, from the at least one cooking appliance, the image related to the product to be cooked; or
obtaining, by using an image sensor, the image related to the product to be cooked.

18. The operation method of claim 16, wherein the obtaining the cooking information of the product to be cooked, on the basis of the image comprises at least one of
recognizing text data comprised in the image and obtaining the cooking information; or
obtaining the cooking information by reading, from a memory, the cooking information corresponding to at least one of a packaging of the product to be cooked, a logo of the product to be cooked, a name of the product to be cooked, or contents of the product to be cooked which are comprised in the image.

19. The operation method of claim 18, wherein the obtaining the cooking information of the product to be cooked, on the basis of the image further comprises at least one of
recognizing the text data by using a trained artificial neural network model; or
determining whether the image comprises the at least one of the packaging of the product to be cooked, the logo of the product to be cooked, the name of the product to be cooked, or the contents of the product to be cooked.

20. The operation method of claim 16,
wherein the obtaining the cooking information of the product to be cooked, on the basis of the image comprises selecting, when a plurality of pieces of the cooking information is obtained for the product to be cooked, one of the plurality of pieces of cooking information,
wherein the transmitting the cooking information to at least one cooking appliance comprises transmitting the selected cooking information to a cooking appliance corresponding to the selected cooking information among the at least one cooking appliance, and
wherein the plurality of pieces of cooking information comprises first cooking information related to a first cooking appliance and second cooking information related to a second cooking appliance.

21. The operation method of claim 20, wherein the selecting one of the plurality of pieces of cooking information comprises:
outputting the plurality of pieces of cooking information such that a user recognizes it; and
receiving a user's input for selecting one of the plurality of pieces of the output cooking information.

22. The operation method of claim 16, further comprising:
transmitting the image related to the product to be cooked to a server; and
receiving the cooking information from the server, in response to the transmission.
